(19) Europäisches Patentamt
European Patent Office
Office européen des brevets

(11) Numéro de publication: **0 528 702 B1**

(12) **FASCICULE DE BREVET EUROPEEN**

(45) Date de publication du fascicule du brevet: **30.08.95**  (51) Int. Cl.6: **G01M 11/00**

(21) Numéro de dépôt: **92402011.8**

(22) Date de dépôt: **10.07.92**

(54) **Système d'imagerie à mesure intégrée de l'usure de ses éléments optiques travaillant en transmission, et équipment optronique d'imagerie comportant un tel système d'imagerie.**

(30) Priorité: **23.07.91 FR 9109276**

(43) Date de publication de la demande:
**24.02.93 Bulletin 93/08**

(45) Mention de la délivrance du brevet:
**30.08.95 Bulletin 95/35**

(84) Etats contractants désignés:
**DE FR GB IT NL**

(56) Documents cités:
**DE-A- 3 439 578          FR-A- 2 134 833**
**GB-A- 1 381 873          US-A- 3 743 427**
**US-A- 3 912 396          US-A- 4 110 046**

**OPTICAL ENGINEERING, vol. 22, no. 6, novembre 1983, pages 743-745, Bellingham, US; M. ZAJA et al.: "Modulation Transfer Function (MTF) Measurement of Thermal Imaging System from The Edge Response Function"**

(73) Titulaire: **THOMSON-CSF**
**173, Boulevard Haussmann**
**F-75008 Paris (FR)**

(72) Inventeur: **Pepin, Christian**
**THOMSON-CSF,**
**SCPI,**
**Cédex 67**
**F-92045 Paris la Défense (FR)**
Inventeur: **Bourgain, Jean-Louis**
**THOMSON-CSF,**
**SCPI,**
**Cédex 67**
**F-92045 Paris la Défense (FR)**

(74) Mandataire: **Lincot, Georges et al**
**THOMSON-CSF,**
**SCPI,**
**B.P. 329,**
**50, rue Jean-Pierre Timbaud**
**F-92402 Courbevoie Cédex (FR)**

EP 0 528 702 B1

EP 0 528 702 B1

IEEE INTERNATIONAL AUTOMATIC TESTING CONFERENCE, vol. 1176, no. 89, 25 septembre 1989, pages 236-241, Philadelphia, US; F.A. ROSELL et al.: "Measuring System Performance Characteristics of Infrared Systems (MRT, MTF, NETD) Using Automatic Test Equipment"

APPLIED OPTICS, vol. 23, no. 12, juin 1984, pages 1967-1971, New York, US; P.K. DATTA et al.: "Influence of Temperature on the MTF of Cascaded Image-Intensifier Tubes"

PATENT ABSTRACTS OF JAPAN, vol. 7, no. 231 (P-229)(1376), 13 octobre 1983; & JP-A-58118943

PATENT ABSTRACTS OF JAPAN, vol. 7, no. 15 (P-169)(1160), 21 janvier 1983; & JP-A-57172222

## Description

L'invention concerne le domaine du contrôle de la qualité de surface d'éléments optiques et a pour objet un système d'imagerie à mesure intégrée de l'usure de ses éléments optiques travaillant en transmission, notamment des hublots de protection des équipements optroniques aéroportés. L'invention s'applique plus particulièrement mais non exclusivement aux équipements optroniques aéroportés comportant un tel système d'imagerie.

Un système d'imagerie comporte une combinaison d'éléments optiques, travaillant en transmission et réflexion, et un détecteur d'imagerie. La combinaison d'éléments optiques projette sur le détecteur d'imagerie une image de la scène observée dans la direction de visée et le détecteur d'imagerie fournit un signal vidéo permettant de visualiser cette scène sur un moniteur.

Dans le cadre de l'application principale envisagée, il convient de rappeler qu'un équipement optronique embarqué sur un avion est classiquement constitué d'un système d'imagerie et d'une tête de visée mobile en gisement, (et éventuellement en site), afin d'orienter la direction de la ligne de visée du système d'imagerie.

La tête de visée optronique abrite un miroir de déviation de la ligne de visée et comporte un hublot pour protéger et isoler de l'atmosphère externe les éléments fragiles du système d'imagerie. Le hublot et le miroir font partie de la combinaison optique du système d'imagerie car ils participent à la formation de l'image projetée sur le détecteur d'imagerie.

La bande spectrale de fonctionnement de l'équipement détermine le choix du matériau constituant le hublot. Malheureusement, les matériaux (ZnSe, Ge ou ZnS) sélectionnés en fonction de leur possibilité de transmission optique dans les fenêtres de transmission infrarouge intéressantes (3-5 $\mu$m et 8-12 $\mu$m), ne possèdent pas de qualités particulières de dureté et d'état de surface . Ces matériaux résistent mal aux contraintes engendrées par le vol à grande vitesse dans un environnement hostile, notamment à la pluvio-érosion, et sont alors exposés au phénomène d'usure.

Cette usure dépend très sensiblement des conditions particulières de vol rencontrées au cours des diverses missions effectuées. Il s'avère donc très difficile de prévoir, a priori, une périodicité de remplacement du hublot adaptée à l'ensemble des missions.

Ainsi, le remplacement du hublot doit être commandé non par sa durée d'utilisation, mais par la détermination du moment à partir duquel l'usure sera telle qu'elle réduira les performances de l'équipement optronique, c'est-à-dire au point de rendre son utilisation opérationnelle impossible.

Un examen visuel de l'état de surface du hublot conclut le plus souvent prématurément à l'usure et donc au remplacement du hublot, ce qui accroît sensiblement le coût de la maintenance . Il est également connu du document US-A-3912396 un dispositif de contrôle de l'état d'une lentille pour mesure de sa fonction de transfert de modulation. De tels contrôles d'examen ne peuvent être effectués qu'au sol.

Afin de permettre la mise en oeuvre d'une procédure de maintenance simple et efficace d'un hublot d'équipement optronique aéroporté ou, plus généralement, de tout élément optique travaillant en transmission d'un système d'imagerie, l'invention propose un système d'imagerie capable de réaliser, de façon autonome et éventuellement en vol, une mesure objective du degré d'usure de cet élément optique.

L'invention exploite le fait que les défauts de surface d'un élément de transmission endommagé provoquent un effet de diffusion de la lumière. Et plus l'érosion est importante, plus grande est la quantité de lumière diffusée. La mesure de la quantité de lumière diffusée constitue donc une mesure objective du degré de l'usure du hublot.

Cette mesure de quantité de lumière diffusée est déduite, dans le cadre de l'invention, de l'analyse de l'image d'une mire de référence vue par le système d'imagerie à travers le hublot. Cette mesure est possible, dans l'application aux équipements optroniques embarqués, quand le hublot à évaluer est lié au dispositif d'orientation de la ligne de visée, ce qui permet de retourner le hublot dans une position où il possible de disposer la mire de référence qui sera vue au travers du hublot.

La lumière diffusée par les défauts de surface provoque alors la dégradation du contraste apparent de l'image et diminue la transmission de la lumière. La dégradation apparente de contraste peut être exprimée par une mesure vidéo, du type de celles réalisées pour l'élaboration de la fonction de transfert de modulation (F.T.M.) d'un système d'imagerie donné. D'autre part, l'atténuation du niveau du signal vidéo analysé permet de mesurer la perte de transmission du hublot.

Plus précisément, l'invention propose un système d'imagerie comportant une combinaison d'éléments optiques et un détecteur d'imagerie sur lequel est projetée l'image de la scène observée à l'aide de la combinaison d'éléments optiques pour fournir un signal vidéo de la scène observée, caractérisé en ce qu'il comporte :

- des moyens pour générer une mire de référence ayant un écart de température défini avec précision,
- des moyens d'asservissement d'écart de température de la mire de référence, destinés à fournir un taux de transfert de modulation de référence connue sur le détecteur d'imagerie, quelle que soit la température ambiante,

- des moyens de retournement de l'élément optique d'entrée couplés à des moyens optiques pour définir, en mode de mesure intégrée de l'usure de l'un au moins de ses éléments optiques travaillant en transmission dans une bande spectrale donnée, un trajet optique destiné à former une image de la mire de référence sur le détecteur d'imagerie à travers l'élément optique à contrôler,

- des moyens de mesure de taux de transfert de modulation et de transmission de la lumière à travers l'élément optique à contrôler à partir de la variation de l'amplitude du signal fourni par le détecteur d'imagerie,

- et des moyens d'alarme destinés à signaler la présence d'un élément optique dont le degré d'usure est supérieur à une valeur critique.

L'invention propose, notamment, d'utiliser ce système d'imagerie pour permettre la mesure du degré d'usure de son élément d'entrée lorsqu'il est orientable, en particulier lorsqu'il constitue le hublot d'entrée d'un équipement optronique embarqué.

L'invention ne nécessite pas l'adjonction d'un système de mesure à l'extérieur de la tête optique, par exemple un outillage placé devant le hublot dans le cadre de l'application aux équipements optroniques aéroportés. Le test ainsi réalisé est un test intégré qui peut être rendu automatique à chaque mise en route de l'équipement ou peut être exécuté en vol si nécessaire, soit à la demande de l'opérateur, soit périodiquement selon une fréquence prérégiée ou ajustée.

D'autres caractéristiques et avantages de l'invention apparaîtront ci-après à la lecture de la description détaillée faite en référence aux dessins annexés qui représentent successivement :

- la figure 1, une représentation graphique de courbe de F.T.M.
- la figure 2, une vue de dessus schématisée d'une tête optronique de visée à débattement en gisement illimité,
- la figure 3, une vue latérale d'une tête optronique à débattement en gisement illimité équipée du dispositif de mesure selon l'invention,
- la figure 4, une courbe de variation du signal du détecteur d'imagerie,
- la figure 5a, la source thermique du dispositif selon l'invention permettant de fournir un écart thermique asservi,
- la figure 5b, une vue en plan de la mire du dispositif de mesure selon l'invention.

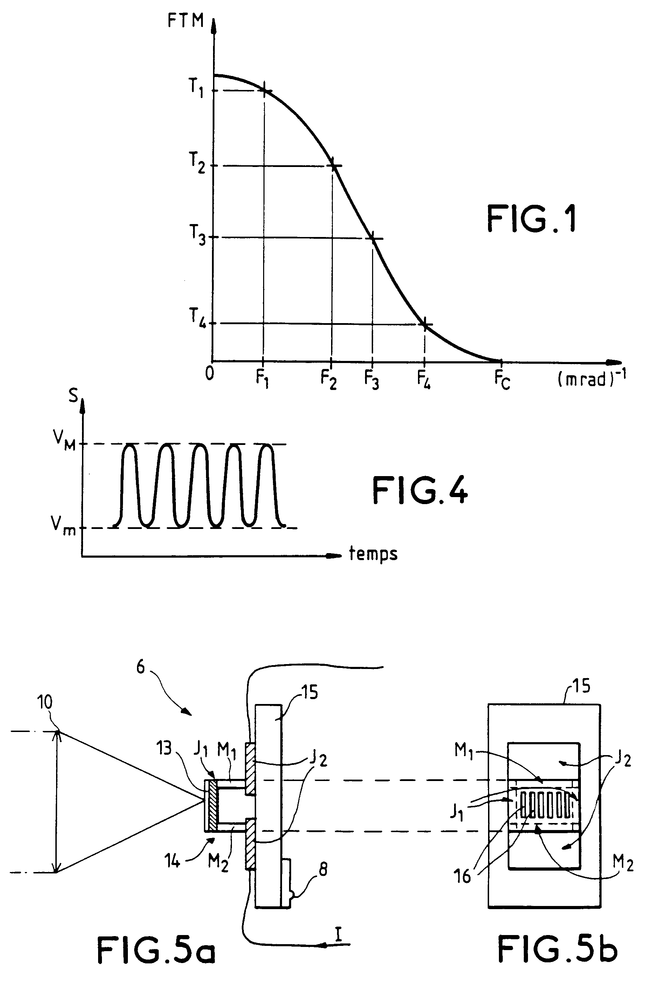

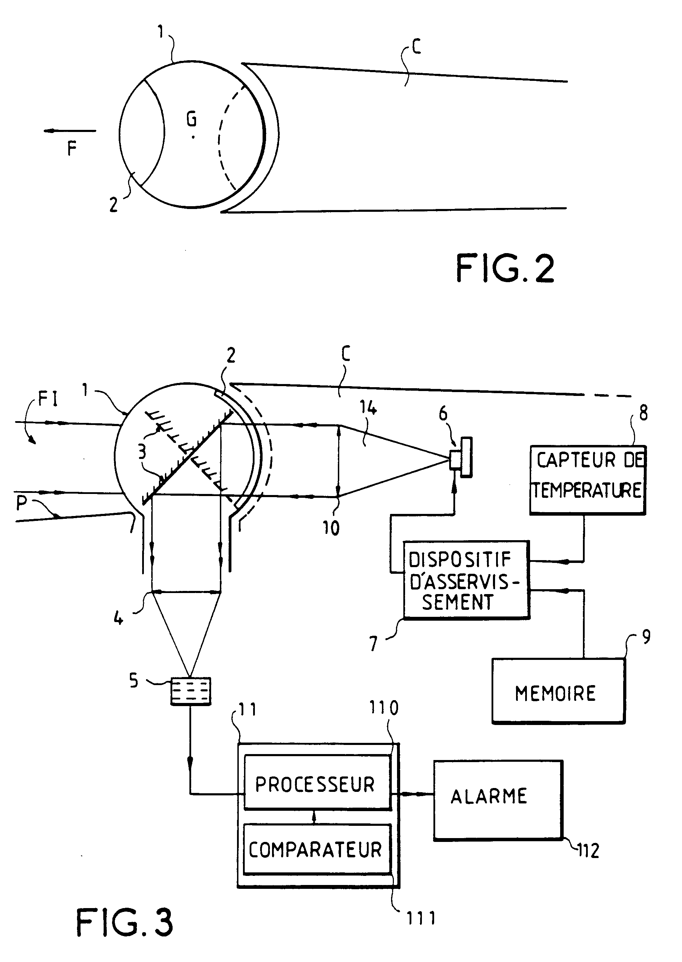

La fonction de transfert de modulation (F.T.M.) est une fonction caractéristique d'un système d'imagerie. Un exemple de F.T.M. est représentée sur la figure 1. Cette fonction donne le niveau du contraste image obtenu par ce système d'imagerie en fonction de la fréquence spatiale, mesurée en $mrad^{-1}$ d'un objet de contraste constant. La variation de hauteur sur une ligne de l'objet balayée par le système d'imagerie, appelée taux de modulation du signal vidéo, mesure le contraste image à la fréquence spatiale de l'objet analysé. La F.T.M. du système d'imagerie peut alors être établie par mesure de différents taux de modulation (T1, T2, T3, T4,...) du signal vidéo fourni par ce système d'imagerie pour différents objets de différentes fréquences spatiales, par exemple pour des mires à traits ayant une périodicité croissante (F1, F2, F3, F4, ...).

La F.T.M. est normée à l'origine pour la fréquence spatiale nulle et décroît jusqu'à la valeur de la fréquence de coupure $F_c$ pour laquelle le contraste est nul.

L'invention utilise ce type de mesure de taux de modulation afin de déterminer le degré d'usure d'un élément optique donné. Les mesures de taux de modulation effectuées avec l'élément optique à contrôler, placé entre la mire et le système d'imagerie, indique le degré d'usure de l'élément optique.

Un exemple de réalisation de système d'imagerie conforme à l'invention, plus particulièrement apte à mesurer le degré d'usure d'un hublot de tête de visée d'un équipement optronique aéroporté, est décrit ci-après en référence aux figures 2 et 3.

La figure 2 représente schématiquement, en vue de dessus, une tête de visée optronique 1 disposée devant un carénage C destiné à réduire la traînée aérodynamique. La tête de visée 1 est munie d'un hublot 2 orienté, en position normale, dans le sens de vol de l'avion symbolisé par la flèche F. La tête de visée 1 peut pivoter autour d'un axe de rotation en gisement G. Dans l'exemple de réalisation représenté, le hublot 2 atteint une position complètement retournée, représentée en vue de dessus en traits pointillés sur la figure 2 et, en vue latérale, en traits pleins sur la figure 3.

Cette possibilité de retournement est exploitée par l'invention pour permettre la mesure du degré d'usure d'un hublot de la tête de visée d'un équipement optronique.

Sur la vue latérale représentée sur la figure 3, figurent de manière schématisée les éléments essentiels d'un équipement optronique et d'un système d'imagerie classique pour un tel équipement. La tête de visée 1 dépasse de la "peau" P de l'avion et est enveloppée par te carénage C. Le système d'imagerie comporte, de manière simplifiée, un miroir de déviation 3, qui tourne solidairement avec la tête de visée, une lentille de focalisation 4 et un détecteur d'imagerie 5.

En mode imagerie, un faisceau incident FI, provenant de la scène à observer, est dévié par le miroir 3, dont la position est représentée en traits pointillés, et est focalisé à l'aide de la lentille 4 sur le détecteur 5. Lorsque le détecteur 5 est un détecteur élémentaire ou de type barrette, un système de balayage (non représenté) est nécessaire afin d'embrasser toute la scène à projeter. Lorsque le détecteur 5 est de type mosaïque, comme dans l'exemple représenté, c'est-à-dire à zones de détection disposées en matrice, il n'existe pas de système de balayage car la surface du détecteur couvre directement l'image de la scène.

En mode de mesure d'usure de hublot, le miroir 3 est complètement retourné en même temps que le hublot 2, dans la position représentée en traits pleins.

Sur la figure 3, sont représentés également les éléments de mesure d'usure du système d'imagerie selon l'invention. Outre le miroir 3, la lentille 4, et le détecteur 5, ces éléments sont : une source thermique 6, dont une entrée est reliée à la sortie d'un dispositif d'asservissement d'écart de température 7, dont les entrées sont reliées à un capteur de température ambiante 8 et à une mémoire de référence 9 ; un objectif de collimation 10 ; un dispositif d'analyse de signal 11, dont l'entrée reçoit le signal de sortie du détecteur 5 et dont la sortie est reliée à une alarme 12.

La source thermique 6, dont la structure est détaillée plus loin, comporte notamment une mire à barres. L'écart de température entre les barres et le reste de la mire est définie avec précision. Cet écart thermique est' en effet déterminé par le dispositif d'asservissement 7 en fonction de la température ambiante mesurée par le capteur 8. L'asservissement consiste à un niveau de référence connu, pour un hublot de référence en bon état à rendre constant et quelle que soit la température ambiante, le taux de transfert de modulation vu par le détecteur d'imagerie 5. La loi d'asservissement est établie par étalonnage à différentes températures ambiantes, les résultats de cet étalonnage étant stockées dans la mémoire 9 sous forme de table de référence.

Le faisceau lumineux 14, issu de la source thermique 6, est collimaté par l'objectif 10, puis réfléchi par le miroir 3, avant d'être projeté sur le détecteur 5 grâce à la lentille 4 afin de former une image de la mire. Le détecteur 5 fournit un signal de sortie qui est analysé par le dispositif 11. Dans le dispositif 11, l'analyse des variations d'amplitude de ce signal de sortie est effectuée pour une ligne de l'image de la mire projetée sur le détecteur 5. Cette analyse consiste à mesurer dans le signal de sortie la valeur du taux de transfert de modulation de l'image vue par le détecteur 5 à travers le hublot 2 considéré.

La figure 4 montre un exemple de courbe de variation, en fonction du temps, du signal issu du détecteur 5 pour une ligne d'image. Cette courbe, qui peut être visualisée par tout moyen connu, se présente classiquement sous la forme d'une sinusoïde présentant une valeur d'amplitude maximale $V_M$ situant le niveau du signal et une valeur d'amplitude minimale $V_m$. Le rapport $T = (V_M - V_m)/(V_M + V_m)$ définit le taux de modulation et mesure donc, directement, le degré d'usure du hublot 2. En outre, la valeur $V_M$ d'amplitude maximale de signal, fournit la valeur du taux de transmission t du hublot si elle est rapportée à une valeur $V_o$ d'amplitude maximale de signal obtenu avec un hublot en bon état ($t = V_M/V_o$).

Le dispositif d'analyse 11, comportant un processeur 110 et un comparateur 111, intègre les valeurs $V_M$, $V_m$, et $V_o$, calcule T et t, et déclenche le cas échéant l'alarme 12, après comparaison des valeurs de T et t à des valeurs de seuil To et to.

Pour un hublot en mauvais état, le niveau du signal en sortie du détecteur est atténué sensiblement par la perte de transmission d'un tel hublot et, d'autre part, le taux de modulation du signal est diminué du fait de la diffusion de la lumière provoquée par la présence des zones endommagées.

Afin de déterminer les conditions de déclenchement de l'alarme 12, le dispositif d'analyse 11 compare les valeurs de taux de transmission t et de taux de modulation T obtenues pour le hublot étudié, à des valeurs de seuil de ces taux. Ces valeurs de seuil critiques sont établies, en fonction de la température ambiante, à l'aide d'un étalonnage initial sur un hublot témoin. Cet hublot témoin est de même type que celui étudié et présente un niveau d'usure à la limite du tolérable, en ce sens qu'il diminuerait sensiblement l'efficacité de l'équipement optronique en mission. Lorsque l'une des valeurs caractéristiques du hublot étudié, T ou t, atteint une valeur critique, l'alarme déclenche un signal qui indique à l'utilisateur que le hublot doit être changé.

En ce qui concerne la constitution de la source thermique 6, il en est décrit ci-après un exemple de réalisation en référence à la figure 5a. Cette source 6 comporte la mire à barres 13 disposée dans le plan focal de l'objectif de collimation 10 et supportée par un dispositif à effet PELTIER 14, lui-même fixé sur une plaque support 15 réalisée en un matériau bon conducteur de la chaleur. La plaque 15 est disposée contre le capteur de température ambiante 8.

Un dispositif à effet PELTIER est constitué de deux matériaux thermoélectriques, M1 et M2, par exemple du tellure de bismuth dopé respectivement n et p, ayant des pouvoirs thermique électriques différents. Ces deux matériaux permettent de définir un écart thermique stable, fonction d'un courant de commande I, entre des jonctions de cuivre J1 et J2. Le courant I a l'intensité correspondant à l'écart de température imposé par le dispositif d'asservissement 7.

La vue en plan de la mire représentée sur la figure 5b montre que la mire 13 est constituée d'une fine plaque métallique portant un motif composé de barres à fréquence spatiale élevée. Ces barres sont formées de fines fentes photogravées de telle façon que la plaque-support 15 soit vue au travers de ces fentes.

Le dispositif à effet PELTIER 14 permet alors d'imposer un écart thermique bien défini entre la mire 13, supporté par la jonction J1, et le fond de l'image constitué par la plaque-support 15 vue au travers des fentes.

L'invention n'est pas limitée à la forme de réalisation décrite et représentée. En particulier, l'homme du métier peut utiliser des mires de structure différente de celle décrite et adapter le matériau des éléments constitutifs pour travailler dans différentes bandes infrarouges (3-5 $\mu$m ou 8-12 $\mu$m). D'autre part, le champ d'application de l'invention n'est pas limité aux équipements optroniques infrarouges embarqués ou non : l'invention peut par exemple s'appliquer aux caméras d'imagerie télévision (en bande de fréquences visibles et proche infrarouge), en utilisant une source à définition de contraste visible et non plus thermique, ou, plus généralement, à tout élément optique de transmission lumineuse d'un système optique donné (lunette périscopique, scanner). En particulier, dans le cas de systèmes optiques complexes, l'invention peut s'appliquer à la localisation d'éléments optiques défectueux.

**Revendications**

1. Système d'imagerie comportant un élément optique d'entrée, une combinaison d'éléments optiques et un détecteur d'imagerie sur lequel est projeté, en mode imagerie, un faisceau incident FI provenant de la scène observée à l'aide de la combinaison d'éléments optiques, caractérisé en ce qu'il comporte :
   - des moyens (6) pour générer une mire de référence ayant un écart de température défini avec précision,
   - des moyens d'asservissement (7 à 9) d'écart de température de la mire de référence, destinés à fournir un taux de transfert de modulation de référence connu sur le détecteur d'imagerie, quelle que soit la température ambiante,
   - des moyens de retournement de l'élément optique d'entrée couplés à des moyens optiques (3, 4, 10) pour définir, en mode de mesure intégrée de l'usure de l'un au moins de ses éléments optiques travaillant en transmission dans une bande spectrale donnée, un trajet optique destiné à former une image de la mire de référence sur le détecteur d'imagerie à travers l'élément optique à contrôler (2),
   - des moyens (11) de mesure des taux de transfert de modulation et de transmission de la lumière à travers l'élément optique à contrôler à partir de la variation de l'amplitude du signal fourni par le détecteur d'imagerie,
   - et des moyens d'alarme (12) destinés à signaler la présence d'un élément optique dont le degré d'usure est supérieur à une valeur critique.

2. Système d'imagerie selon la revendication 1, caractérisée en ce que les moyens pour générer la mire de référence d'écart thermique bien défini comporte une source thermique (6) constituée par une mire à barres (13) supporté par un dispositif à effet PELTIER (14), et en ce que le moyen de mesure des taux de transfert de modulation (T) et de transmission (t) à partir de la variation de l'amplitude du signal fourni par le détecteur (5) est un dispositif d'analyse (11) comportant un processeur (110) et un comparateur (111) fournissant des valeurs de seuils (To, to).

3. Système d'imagerie selon la revendication 1, caractérisé en ce que les moyens d'asservissement d'écart de température de la mire de référence comportent un dispositif d'asservissement d'écart de température (7) couplé à une mémoire de référence (9) et à un capteur de température ambiante (8) disposé contre une plaque support (15) bonne conductrice de la chaleur, en ce que le dispositif (7) applique un courant (I) au dispositif à effet PELTIER (14) commandant un écart de température entre la mire à barres (13) et la plaque-support (15) fonction de la température ambiante et des valeurs de référence d'écart de température mémorisées dans la mémoire (9) pour différentes températures ambiantes, ces valeurs de référence constituant une loi d'asservissement imposant un taux de transfert de modulation connu pour un élément optique de référence en bon état.

4. Système d'imagerie selon la revendication 3 caractérisé en ce qu'il est monté dans un équipement d'imagerie télévision.

5. Equipement optronique comportant un système d'imagerie selon l'une des revendications précédentes couplé à une tête de visée orientable (1) équipée d'un hublot d'entrée (2) et d'un miroir de déviation (3) afin d'orienter la ligne de visée du système d'imagerie, caractérisé en ce que l'élément optique d'entrée à contrôler est le hublot de protection (2) équipant la tête de visée (1) et en ce que la source thermique (6) est disposée en une position telle que, par rotation de la tête optique, la ligne de visée est orientée vers la source thermique (6) afin de projeter l'image de cette source sur le détecteur (5) à travers le hublot (2).

**Claims**

1. Imaging system including an entry optical element, a combination of optical elements and an imaging detector on which, in imaging mode, an incident beam FI, originating from the scene observed, is projected by use of the combination of optical elements, characterized in that it includes:

   - means (6) for generating a reference pattern having a precisely defined temperature difference,
   - means (7 to 9) for slaving the temperature difference of the reference pattern, which are intended to supply a known reference modulation transfer ratio to the imaging detector, whatever the ambient temperature,
   - means for turning back the entry optical element, which are coupled to optical means (3, 4, 10) in order, in the mode for integrated measurement of the wear of at least one of its optical elements working in transmission in a given spectral band, to define an optical path intended to form an image of the reference pattern on the imaging detector through the optical element to be checked (2),
   - means (11) for measuring the modulation transfer ratio and ratio of light transmission through the optical element to be checked on the basis of the variation in the amplitude of the signal supplied by the imaging detector,
   - and alarm means (12) intended to signal the presence of an optical element, the degree of wear of which is greater than a critical value.

2. Imaging system according to Claim 1, characterized in that the means for generating the well-defined thermal-difference reference pattern include a thermal source (6) consisting of a bar pattern (13) supported by a PELTIER-effect device (14), and in that the means for measuring the modulation transfer (T) and transmission (t) ratios on the basis of the variation in the amplitude of the signal supplied by the detector (5) is an analysis device (11) including a processor (110) and a comparator (111) supplying threshold values (To, to).

3. Imaging system according the Claim 1, characterized in that the means for slaving the temperature difference of the reference pattern include a temperature-difference slaving device (7) coupled to a reference memory (9) and to an ambient temperature sensor (8) arranged against a support plate (15) which is a good conductor of heat, in that the device (7) applies a current (I) to the PELTIER-effect device (14) causing a temperature difference between the bar pattern (13) and the support plate (15) which is a function of the ambient temperature and of the temperature-difference reference values held in the memory (9) for different ambient temperatures, these reference values constituting a slaving law imposing a known modulation transfer ratio for a reference optical element in good condition.

4. Imaging system according to Claim 3, characterized in that it is mounted in television imaging equipment.

5. Optoelectronic equipment including an imaging system according to one of the preceding claims, coupled to an orientable sighting head (1) equipped with an entry window (2) and with a deflection mirror (3) so as to orient the line of sight of the imaging system, characterized in that the entry optical element to be checked is the protective window (2) equipping the sighting head (1) and in that the thermal source (6) is arranged in a position such that, by rotating the optical head, the line of sight is oriented towards the thermal source (6) so as to project the image of this source onto the detector (5) through the window (2).

**Patentansprüche**

1. Abbildungssystem mit einem optischen Eingangselement, einer Kombination optischer Elemente und einer Bilderfassungsvorrichtung, auf die im Abbildungsmodus ein einfallendes, von der betrachteten Szene stammenden Bündel FI mit Hilfe der Kombination optischer Elemente projiziert wird, dadurch gekennzeichnet, daS es umfaßt:

- Mittel (6) zum Erzeugen eines Referenz-Testbildes, welches einen genau bestimmten Temperaturabstand aufweist;
- Mittel (7 bis 9) zum Regeln des Temperaturabstandes des Referenz-Testbildes, die dafür vorgesehen sind, unabhängig von der Umgebungstemperatur einen bekannten Referenz-Modulationsübertragungsgrad zu der Bild-Erfassungsvorrichtung zu liefern;
- Mittel zum Umkehren des optischen Eingangselements, die mit optischen Mitteln (3, 4, 10) gekoppelt sind, um im Modus des integrierten Messens der Abnutzung von wenigstens einem seiner in einem gegebenen Spektralbereich in Transmission arbeitenden optischen Elemente einen optischen Weg zu bestimmen, der dafür vorgesehen ist, über das zu kontrollierende optische Element (2) ein Abbild des Referenz-Testbildes auf der Bild-Erfassungsvorrichtung zu bilden;
- Mittel (11) zum Messen des Modulationsübertragungsgrades und des Transmissionsgrades des durch das zu kontrollierende optische Element übertragenen Lichts ausgehend von der Veränderung der Amplitude des von der Bild-Erfassungsvorrichtung gelieferten Signals;
- und Alarmmittel (12), die dafür vorgesehen sind, das Vorhandensein eines optischen Elements zu signalisieren, dessen Abnutzungsgrad größer als ein kritischer Wert ist.

2. Abbildungssystem nach Anspruch 1, dadurch gekennzeichnet, daß die Mittel zum Erzeugen des Referenz-Testbildes mit genau bestimmtem Wärmeabstand eine Wärmequelle (6) umfassen, die durch ein Streifen-Testbild (13) gebildet ist, das von einer Vorrichtung (14) mit PELTIER-Effekt getragen ist, und daß die Mittel zum Messen des Modulationsübertragungsgrades (T) und des Transmissionsgrades (t) ausgehend von der Veränderung der Amplitude des von der Erfassungsvorrichtung (5) gelieferten Signals eine Analyse-Vorrichtung (11) sind, die einen Prozessor (110) und einen Vergleicher (111) umfaßt, die Schwellenwerte (To, to) liefern.

3. Abbildungssystem nach Anspruch 1, dadurch gekennzeichnet, daß die Mittel zum Regeln des Temperaturabstandes des Referenz-Testbildes eine Vorrichtung (7) zum Regeln des Temperaturabstandes enthalten, die mit einem Referenz-Speicher (9) und mit einem Umgebungstemperatur-Sensor (8) verbunden ist, der an einer gute wärmeleitenden Trägerplatte (15) angebracht ist, und daß die Vorrichtung (7) an die Vorrichtung (14) mit PELTIER-Effekt einen Strom (I) anlegt, der zwischen dem Streifen-Testbild (13) und der Trägerplatte (15) einen Temperaturabstand steuert, der von der Umgebungstemperatur und von in dem Speicher (9) für verschiedene Umgebungstemperaturen gespeicherten Referenzwerten des Temperaturabstandes abhängt, wobei diese Referenzwerte eine Regelvorschrift bilden, die für ein optisches Referenz-Element in gutem Zustand einen bekannten Modulationsübertragungsgrad bestimmt.

4. Abbildungssystem nach Anspruch 3, dadurch gekennzeichnet, daß es in einer Fernseh-Abbildungseinrichtung angebracht ist.

5. Optoelektronische Einrichtung mit einem Abbildungssystem nach einem der vorhergehenden Ansprüche, verbunden mit einem ausrichtbaren Visierkopf (1), der mit einem Eingangsfenster (2) und einem Ablenkspiegel (3) versehen ist, um die Visierlinie des Abbildungssystems auszurichten, dadurch gekennzeichnet, daß das zu kontrollierende optische Eingangselement das Schutzfenster (2) ist, mit dem der Visierkopf (1) versehen ist, und daß die Wärmequelle (6) in einer solchen Position angeordnet ist, daß die Visierlinie durch Drehung des optischen Kopfes zur Wärmequelle (6) hin ausgerichtet wird, um das Abbild dieser Quelle über das Fenster (2) auf die Erfassungsvorrichtung (5) zu projizieren.

FIG.1

FIG.4

FIG.5a

FIG.5b

FIG.2

FIG.3